# FASCICULE DE BREVET EUROPEEN

(11) **EP 3 280 942 B1**
(45) Date de publication et mention de la délivrance du brevet: **18.06.2025**
(21) Numéro de dépôt: 16714922.8
(22) Date de dépôt: 07.04.2016
(51) Int. Cl.: F16L 37/091

(54) **ENSEMBLE COMPORTANT UN DISPOSITIF DE RACCORDEMENT A JOINT MOBILE ET UN TUBE CHANFREINE**
ANORDNUNG BEINHALTEND EINE VERBINDUNGSVORRICHTUNG MIT BEWEGLICHER DICHTUNG UND EIN ABGESCHRÄGTES ROHR
ASSEMBLY COMPRISING A CONNECTING DEVICE HAVING A MOVABLE SEAL AND A CHAMFERED TUBE

(30) Priorité: 10.04.2015 FR 1553144
(43) Date de publication de la demande: 14.02.2018
(73) Titulaire: Parker Hannifin Manufacturing France SAS, 74112 Annemasse (FR)
(72) Inventeur: LE QUERE, Philippe, 35830 Betton (FR)
(74) Mandataire: Cabinet Boettcher
(86) Numéro de dépôt international: PCT/EP2016/057640
(87) Numéro de publication internationale: WO 2016/162432

(56) Documents cités:
- WO-A1-2010/052386
- FR-A1- 3 006 030

## Description

La présente invention concerne les circuits de transport de fluide et plus particulièrement un dispositif de raccordement d'un tube à un élément du circuit tel qu'un autre tube ou un élément émetteur ou récepteur de fluide comme un distributeur, un actionneur, un régulateur...

### ETAT DE LA TECHNIQUE

Il existe des dispositifs de raccordement pour des tubes de transport de fluide ayant une extrémité qui est pourvue d'un chanfrein interne. Un tel dispositif comprend un corps comportant une paroi cylindrique délimitant un canal ayant un tronçon d'extrémité pourvu de moyens pour y assujettir l'extrémité de tube de manière étanche. Ces moyens comportent un élément annulaire d'étanchéité élastiquement déformable et un élément d'accrochage du tube comme une rondelle dentée d'accrochage. Un tel dispositif est par exemple connu du document FR-A-3006030.

Les éléments d'étanchéité les plus courants ont une section transversale circulaire agencée pour permettre à l'élément d'étanchéité d'enserrer le tube. Il existe néanmoins des éléments d'étanchéité avec des sections d'autres formes et par exemple des éléments d'étanchéité de section carrée comprenant une bague support ayant une première face vers une entrée du tronçon d'extrémité et une deuxième face annulaire à l'opposé, une surface périphérique externe et une surface périphérique interne.

Une difficulté rencontrée avec ces dispositifs de raccordement concerne leur utilisation avec des tubes multicouches. En effet, il importe que l'étanchéité soit assurée en bout de tube de telle manière à éviter que le contact du fluide avec le tube n'entraîne une délamination des couches du tube. Pour cela, il est connu de recourir à des éléments d'étanchéité venant au contact de la face terminale du tube. Toutefois, l'effort d'engagement correct du tube n'est pas constant d'un tube à l'autre car il dépend de l'ovalisation présentée par le tube. Il en résulte que la face terminale du tube n'est pas toujours appliquée contre l'élément d'étanchéité.

### OBJET DE L'INVENTION

Un but de l'invention est d'améliorer l'étanchéité de ces dispositifs de raccordement.

### BREF EXPOSE DE L'INVENTION

A cet effet, on prévoit, selon l'invention, un dispositif de raccordement selon la revendication 1.

Cet agencement assure une étanchéité de manière particulièrement fiable, en particulier mais pas exclusivement, pour les tubes multicouches.

D'autres caractéristiques et avantages de l'invention ressortiront à la lecture de la description qui suit d'un mode de réalisation particulier non limitatif de l'invention.

### BREVE DESCRIPTION DES FIGURES

Il sera fait référence aux dessins annexés, parmi lesquels :

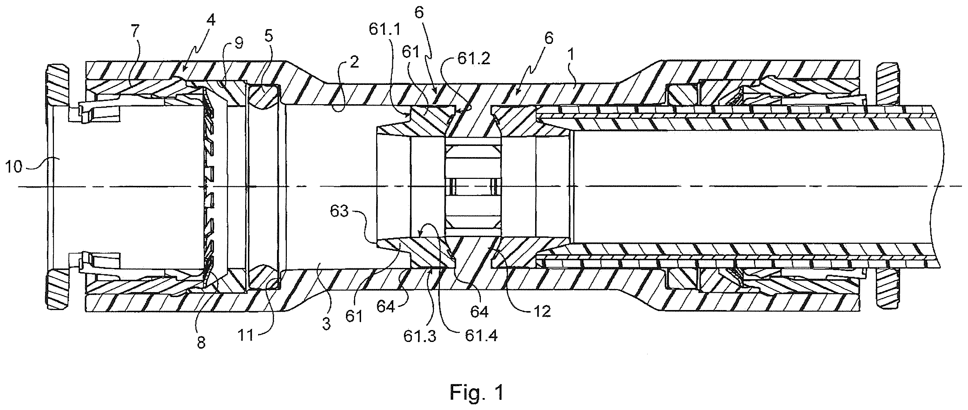

- la figure 1 est une vue en coupe longitudinale d'un dispositif de raccordement conforme à l'invention ;
- la figure 2 est une vue partielle agrandie, en coupe longitudinale, de ce dispositif de raccordement, au cours de l'insertion du tube ;
- la figure 3 est une vue analogue à la figure 2, à la fin de l'insertion du tube ;
- la figure 4 est une vue en perspective de l'élément d'étanchéité, montrant plus particulièrement l'avant de l'élément d'étanchéité ;
- la figure 5 est une vue en perspective de l'élément d'étanchéité, montrant plus particulièrement l'arrière de l'élément d'étanchéité.

### DESCRIPTION DETAILLEE DE L'INVENTION

Le dispositif de raccordement représenté sur les figures est un dispositif de raccordement double destiné à raccorder deux tubes 100 l'un à l'autre. Chaque tube 100 est multicouche (ici une couche interne, une couche intermédiaire et une couche externe) et a une extrémité pourvue d'un chanfrein interne 101 et d'un chanfrein externe 102. Le chanfrein interne 101 et le chanfrein externe 102 sont reliés l'un à l'autre par une surface radiale 103 formant la face terminale de l'extrémité de tube. La couche intermédiaire débouche sur la surface radiale 103.

Le dispositif de raccordement possède un corps 1 axialement divisé en deux sections de connexion identiques l'une à l'autre. Le corps 1 a une paroi cylindrique 2 qui délimite un canal 3 ayant des tronçons d'extrémité pourvus chacun de moyens pour y assujettir une des extrémités de tube de manière étanche.

Pour chaque tronçon d'extrémité, ces moyens comportent ici :
- un ensemble, généralement désigné en 4 d'accrochage de l'extrémité de tube 100,
- un premier élément annulaire d'étanchéité 5 en matériau élastiquement déformable,
- un deuxième élément annulaire d'étanchéité, généralement désigné en 6, en matériau élastiquement déformable.

L'ensemble d'accrochage 4 comprend un insert 7 en deux parties entre lesquelles est logée une rondelle 8 dentée intérieurement pour mordre la surface externe de l'extrémité de tube. L'insert 7 est reçu dans un chambrage d'entrée 9 du tronçon d'extrémité du canal 2 et reçoit à coulissement un poussoir de déconnexion 10 mobile entre une position sortie dans laquelle le nez du poussoir de déconnexion 10 est écarté de la rondelle 8 et une position enfoncée dans laquelle le nez du poussoir de déconnexion 10 soulève les dents de la rondelle 8.

L'élément d'étanchéité 5 est reçu dans le chambrage d'entrée 9 entre l'insert 7 et un épaulement 11 marquant la fin du chambrage d'entrée 9. L'élément d'étanchéité 5 a une section sensiblement rectangulaire avec une portion interne renflée vers l'axe central de l'élément d'étanchéité 5. L'élément d'étanchéité 5 comprend en outre un bourrelet externe s'étendant en saillie de sa surface périphérique externe. L'élément d'étanchéité 5 est dimensionné pour enserrer élastiquement la surface externe de l'extrémité de tube 100.

L'élément d'étanchéité 6 comprend une bague support 61 ayant une première face 61.1 annulaire vers une entrée du tronçon d'extrémité, une deuxième face 61.2 annulaire à l'opposé de la première face 61.1, une surface périphérique externe 61.3 cylindrique et une surface périphérique interne 61.4 cylindrique.

L'élément d'étanchéité 6 comprend une portion tubulaire 62 qui s'étend en saillie axiale de la première face 61.1 vers une entrée du tronçon d'extrémité et qui a une extrémité libre 63 agencée pour prendre appui contre le chanfrein interne 101 de l'extrémité de tube 100 pour s'engager à force dans l'extrémité de tube 100 lors de l'introduction du tube 100 dans le tronçon d'extrémité. La portion tubulaire 62 a une surface externe tronconique 62.1 se rétrécissant en direction de l'extrémité libre 63 de la portion tubulaire 62 et une surface interne tronconique 62.2 s'évasant en direction de l'extrémité libre 63 de la portion tubulaire 62.

La surface tronconique interne 62.2 forme avec la surface périphérique interne 61.4 (ou l'axe central du canal) un angle α ici d'environ 15° (lorsque l'élément d'étanchéité 6 est au repos). Le chanfrein interne 101 forme avec la surface périphérique interne 61.4 (ou l'axe central du canal) un angle ω ici d'environ 20°. De préférence, l'angle ω est inférieur d'environ 5° à l'angle α. L'angle β formé entre la surface tronconique externe 62.1 et la surface périphérique interne 61.4 (ou l'axe central du canal) est au plus égal à la différence entre l'angle ω et l'angle α.

Deux bourrelets 64 s'étendent en saillie radiale de la surface externe 61.3 de l'élément d'étanchéité 6 pour prendre appui contre la paroi 2 du tronçon d'extrémité. Les bourrelets 64 sont écartés l'un de l'autre pour améliorer la stabilité de l'élément d'étanchéité 6. Plus précisément ici, les bourrelets 64 sont disposés le long de deux bords opposés de la surface externe 61.3 de l'élément d'étanchéité 6.

La deuxième face 61.2 de l'élément d'étanchéité 6 est concave. Plus précisément, cette deuxième face comprend une bordure externe radiale, une partie centrale radiale et, entre les deux une partie intermédiaire tronconique en saillie de laquelle s'étend coaxialement une nervure annulaire 65.

L'élément d'étanchéité 6 est monté dans une partie terminale du tronçon d'extrémité entre l'élément d'étanchéité 5 et un redan central 12 du corps 1. Le redan central 12 a une forme sensiblement annulaire mais est interrompu par des rainures de telle manière que même lorsque la deuxième face 61.2 est en appui contre le redan central 12, le fluide sous pression peut atteindre la deuxième face 61.2. Les rainures permettent donc un passage du fluide vers la deuxième face 61.2 de l'élément d'étanchéité 6. Le redan central 12 est délimité dans le sens de la longueur par deux surfaces ayant une forme sensiblement tronconique sensiblement complémentaire de la deuxième face 61.2.

L'élément d'étanchéité 6 est dimensionné de sorte qu'il est serré dans la partie terminale du tronçon d'extrémité du canal 2 tout en restant déplaçable en translation axiale dans le tronçon d'extrémité sous l'effet du fluide sous pression appliqué contre la deuxième face latérale 61.2.

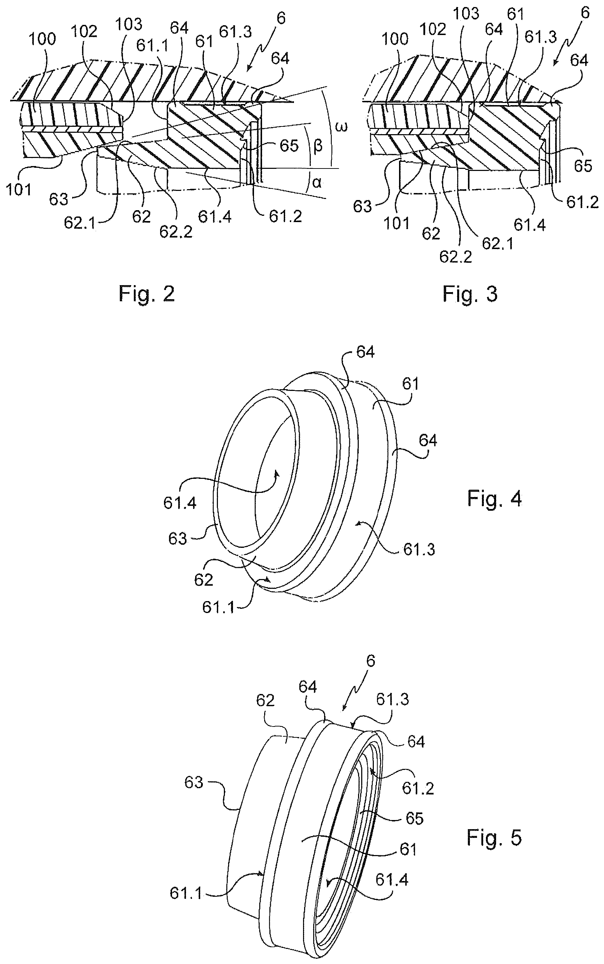

On comprend que lorsque l'extrémité de tube 100 est enfoncée dans le tronçon d'extrémité du canal 2, l'extrémité libre 63 prend contact avec le chanfrein interne 101 et s'engage à force dans l'extrémité de tube 100 provoquant une déformation de la portion tubulaire 62 (figure 2). On note que le redan central 12 s'oppose à un enfoncement de l'élément d'étanchéité 6 dans le canal 2 sous l'effort exercé par le tube 100 lors de la connexion.

A la fin de la connexion (figure 3), la face terminale 103 de l'extrémité de tube est en appui contre la première face 61.1, la portion tubulaire 62 est serrée dans l'extrémité de tube 100 au niveau du chanfrein interne 101, et l'élément d'étanchéité 6 est en appui contre le redan central 12. La surface tronconique interne 62.2 s'étend alors sensiblement dans l'alignement de la surface périphérique interne 61.4 de sorte que la déformation de la portion tubulaire 62 n'entraine pas de réduction de la section de passage de l'élément d'étanchéité 6. Lors de la mise sous pression du circuit dans lequel le tube et le dispositif de raccordement sont implantés, le fluide sous pression va exercer une pression sur la deuxième face 61.2 qui va rester plaquée contre la face terminale de l'extrémité de tube 100 qui va légèrement reculer jusqu'à ce que les dents de la rondelle mordent dans la surface externe de l'extrémité de conduite 100.

Si le tube 100 n'est pas correctement enfoncé, la face terminale 103 n'est pas en contact avec la première face 61.1. Dans cette situation, une étanchéité suffisante est néanmoins assurée par le contact de la portion tubulaire 62 contre le chanfrein interne 101 (figure 2). Lors de la mise sous pression du circuit, le fluide va exercer sur la deuxième face 61.2 une pression supérieure à celle exercée du côté de la portion tubulaire 62. Il en résulte que l'élément d'étanchéité 6 va se déplacer vers l'entrée du canal 2 jusqu'à ce que la première face 61.1 arrive en butée contre la face terminale 103.

L'élément d'étanchéité 5 permet également d'assurer une étanchéité en cas d'utilisation d'un tube ayant un diamètre interne supérieur au diamètre externe de la portion tubulaire 62 (un tel diamètre de tube rendant la portion tubulaire 62 inopérante).

Bien entendu, l'invention n'est pas limitée au mode de réalisation décrit mais englobe toute variante entrant dans le champ de l'invention telle que définie par les revendications.

En particulier, le dispositif de raccordement peut être agencé pour raccorder un tube à un élément de circuit. Le corps du dispositif de raccordement comporte une première section de connexion à un tube et une deuxième section de connexion à l'élément de circuit. La deuxième section de connexion peut être en une seule pièce avec le corps de l'élément de circuit ou peut être pourvu de moyens de son implantation dans l'élément de circuit. La deuxième section de connexion est par exemple pourvue d'un filetage permettant son engagement dans un taraudage du corps de l'élément de circuit.

Les éléments d'étanchéité peuvent avoir une autre forme que celles décrites.

L'élément d'étanchéité 5 peut avoir par exemple une section circulaire ou quadrilobée.

L'élément d'étanchéité 6 peut avoir une portion tubulaire comportant au moins une surface cylindrique.

L'élément d'ancrage peut être d'un autre type qu'une rondelle d'accrochage et par exemple une pince en une seule pièce avec le poussoir de déconnexion ou une bague mobile radialement.

Les angles ω, α et β peuvent avoir d'autres valeurs que celles mentionnées.

## Revendications

1. Ensemble comportant un dispositif de raccordement et un tube (100) de transport de fluide ayant une extrémité pourvue d'un chanfrein interne (101), le dispositif comportant un corps (1) comportant une paroi cylindrique (2) délimitant un canal (3) ayant un tronçon d'extrémité pourvu de moyens pour y assujettir l'extrémité de tube de manière étanche, ces moyens comportant un élément annulaire d'étanchéité (6) élastiquement déformable comprenant une bague support (61) ayant une première face (61.1) vers une entrée du tronçon d'extrémité pour venir au contact d'une face terminale (103) du tube (100) et une deuxième face annulaire (61.2) à l'opposé, une surface périphérique externe (61.3) et une surface périphérique interne (61.4), le corps comportant une butée interne (12) à l'enfoncement de l'élément d'étanchéité (6) dans le corps, l'élément d'étanchéité comprenant une portion tubulaire (62) qui s'étend en saillie axiale de la première face (61.1) vers une entrée du tronçon d'extrémité et qui a une extrémité libre (63) agencée pour prendre appui contre le chanfrein interne (101) de l'extrémité de tube (100) pour s'engager à force dans l'extrémité de tube lors de l'introduction du tube qui provoque une déformation de la portion tubulaire (62) avant que la face terminale du tube vienne en contact contre la première face (61.1) de la bague support (61), la butée interne (12) du corps (1) comportant au moins une rainure pour permettre un passage du fluide vers la deuxième face (61.2) de l'élément d'étanchéité (6) de telle manière que l'élément d'étanchéité (6) est monté pour être déplaçable en translation axiale dans le tronçon d'extrémité pour être appliqué contre l'extrémité de tube sous l'effet du fluide sous pression appliqué contre la deuxième face (61.2) de l'élément d'étanchéité (6), la portion tubulaire (62) ayant une surface externe tronconique (62.1) se rétrécissant en direction de l'extrémité libre (63) de la portion tubulaire (62) et une surface interne tronconique (62.2) qui s'évase en direction de l'extrémité libre (63) de la portion tubulaire (62); **caractérisé en ce que** la surface interne tronconique (62.2) de la portion tubulaire (62) est agencée pour s'étendre sensiblement dans l'alignement de la surface périphérique interne (61.4) lorsque la portion tubulaire (62) a été engagée à force dans l'extrémité de tube de sorte que la déformation de la portion tubulaire (62) ée n'entraine pas de réduction de la section de passage de l'élément d'étanchéité (6), la surface interne tronconique formant avec un axe central du canal un premier angle (α) inférieur à un deuxième angle (ω) formé entre le chanfrein interne du tube et l'axe central ; la surface externe tronconique (62.1) de la portion tubulaire (62) formant avec l'axe central un troisième angle (β) au plus égal à une différence entre le deuxième angle et le premier angle.

2. Dispositif selon la revendication 1, dans lequel deux bourrelets (64) s'étendent en saillie radiale de la surface périphérique externe (61.3) de l'élément d'étanchéité (6) pour prendre appui contre la paroi (2) du tronçon d'extrémité.

3. Dispositif selon la revendication 2, dans lequel les bourrelets (64) sont disposés le long de deux bords opposés de la surface périphérique externe (61.3) de l'élément d'étanchéité (6).

4. Dispositif selon la revendication 1, dans lequel la deuxième face (61.2) est concave.

5. Dispositif selon la revendication 1, dans lequel au moins une nervure annulaire (65) s'étend coaxialement en saillie de la deuxième face (61.2).

## Patentansprüche

1. Anordnung enthaltend eine Anschlussvorrichtung und ein Fluidförderrohr (100), das ein Ende mit einer inneren Abschrägung (101) aufweist, wobei die Vorrichtung einen Körper (1) mit einer zylindrischen Wand (2) enthält, die einen Kanal (3) begrenzt, der einen Endabschnitt mit Mitteln aufweist, an welchen das Rohrende abdichtend befestigt wird, wobei diese Mittel ein elastisch verformbares, ringförmiges Dichtungselement (6) enthalten, das einen Einlegering (61) umfasst, welcher eine zu einem Endabschnitt-Eingang hin weisende erste Fläche (61. 1) aufweist, die mit einer Endfläche (103) des Rohrs (100) in Kontakt tritt, sowie eine entgegengesetzte, zweite ringförmige Fläche (61.2), eine äußere Umfangsfläche (61.3) und eine innere Umfangsfläche (61.4) aufweist, wobei der Körper einen Innenanschlag (12) zur Einbringung des Dichtungselements (6) in den Körper enthält, wobei das Dichtungselement einen rohrförmigen Abschnitt (62) umfasst, der sich von der ersten Fläche (61. 1) axial vorstehend zu einem Endabschnitt-Eingang hin erstreckt und ein freies Ende (63) aufweist, das dafür ausgelegt ist, an der inneren Abschrägung (101) des Rohrendes (100) anzuliegen, um bei der Einführung des Rohrs unter Krafteinwirkung in das Rohrende hineingezwängt zu werden, was zu einer Verformung des rohrförmigen Abschnitts (62) führt, bevor die Endfläche des Rohrs mit der ersten Fläche (61.1) des Einlegerings (61) in Kontakt tritt, wobei der Innenanschlag (12) des Körpers (1) zumindest eine Nut enthält, um einen Fluiddurchgang zu der zweiten Fläche (61.2) des Dichtungselements (6) hin zu ermöglichen, sodass das Dichtungselement (6) axial verschiebbar in dem Endabschnitt angebracht ist, damit es unter Einwirkung des gegen die zweite Fläche (61. 2) des Dichtungselements (6) anliegenden, druckbeaufschlagten Fluids an das Rohrende angedrückt wird, wobei der rohrförmige Abschnitt (62) eine sich zu dem freien Ende (63) des rohrförmigen Abschnitts (62) hin verjüngende kegelstumpfförmige Außenfläche (62.1) und eine sich zu dem freien Ende (63) des rohrförmigen Abschnitts (63) hin aufweitende kegelstumpfförmige Innenfläche (62.2) aufweist; **dadurch gekennzeichnet, dass** die kegelstumpfförmige Innenfläche (62.2) des rohrförmigen Abschnitts (62) dafür ausgelegt ist, sich im Wesentlichen fluchtend mit der inneren Umfangsfläche (61.4) zu erstrecken, wenn der rohrförmige Abschnitt (62) unter Krafteinwirkung in das Rohrende hineingezwängt worden ist, sodass die Verformung des rohrförmigen Abschnitts (62) zu keinem verringerten Öffnungsquerschnitt des Dichtungselements (6) führt, wobei die kegelstumpfförmige Innenfläche mit einer Zentralachse des Kanals einen ersten Winkel (α) bildet, der kleiner als ein zwischen der inneren Abschrägung des Rohrs und der Zentralachse gebildeter zweiter Winkel (ω) ist; wobei die kegelstumpfförmige Außenfläche (62.1) des rohrförmigen Abschnitts (62) mit der Zentralachse einen dritten Winkel (β) bildet, der höchstens einer Differenz zwischen dem zweiten Winkel und dem ersten Winkel entspricht.

2. Vorrichtung nach Anspruch 1, wobei sich zwei Wülste radial vorstehend aus der äußeren Umfangsfläche (61.3) des Dichtungselements (6) heraus erstrecken, um an der Wand (2) des Endabschnitts anzuliegen.

3. Vorrichtung nach Anspruch 2, wobei die Wülste entlang zweier entgegengesetzter Ränder der äußeren Umfangsfläche (61.3) des Dichtungselements (6) angeordnet sind.

4. Vorrichtung nach Anspruch 1, wobei die zweite Fläche (61.2) konkav ausgebildet ist.

5. Vorrichtung nach Anspruch 1, wobei sich zumindest eine ringförmige Rippe (65) koaxial vorstehend aus der zweiten Fläche (61.2) heraus erstreckt.

## Claims

1. A coupling device for a fluid transport tube (100) having an end provided with an internal chamfer (101), the device comprising a body (1) including a cylindrical wall (2) defining a channel (3) having an end segment provided with means for securing the tube end thereto in leaktight manner, these means including an elastically deformable annular sealing element (6) comprising a support ring (61) having a first face (61.1) towards an inlet of the end segment in order to come into contact with a terminal face (103) of the tube (100) and an opposite second annular face (61.2), an external peripheral surface (61.3), and an internal peripheral surface (61.4), the body including an internal abutment (12) against the sealing element (6) being pushed into the body, the sealing element comprising a tubular portion (62) that projects axially from the first face (61.1) towards an inlet of the end segment and that has a free end (63) arranged to bear against the internal chamfer (101) of the tube end (100) in order to be forcibly engaged in the tube end while the tube is being inserted into the end segment producing a deformation of the tubular portion (62) before the terminal face of the tube comes into contact against the first face (61.1) of the support ring (61), the internal abutment (12) of the body (1) including at least one groove for allowing the fluid to pass towards the second face (61.2) of the sealing element (6) so that the sealing element (6) is mounted to be movable in axial translation in the end segment so as to be pressed against the tube end under the effect of the fluid under pressure applied against the second face (61.2) of the sealing element (6), the tubular portion (62) having a frustoconical external surface (62.1) tapering towards the free end (63) of the tubular portion (62) and a frustoconical internal surface (62.2) flaring towards the free end (63) of the tubular portion (62), **characterized in that** the frustoconical internal surface (62.2) flaring towards the free end (63) of the tubular portion (62) is arranged to sensibly extend in alignment with the internal peripheral surface (61.4) when the tubular portion (62) has been forcibly engaged in the tube end so that the deformation of the tubular portion does not produce any restriction of the section of the passageway of the sealing element (6), the frustoconical internal surface forming a first angle (α) with a central axis of the channel, which first angle (α) is less than a second angle (ω) formed between the internal chamfer and the central axis; the frustoconical external surface (62.1) of the tubular portion (62) forming a third angle (β) with the central axis, which third angle (β) is no greater than the difference between the second angle and the first angle.

2. A device according to claim 1, wherein two beads (64) project radially from the external peripheral surface (61.3) of the sealing element (6) in order to bear against the wall (2) of the end segment.

3. A device according to claim 2, wherein the beads (64) are arranged along two opposite edges of the external peripheral surface (61.3) of the sealing element (6).

4. A device according to claim 1, wherein the second face (61.2) is concave.

5. A device according to claim 1, wherein at least one annular rib (65) projects coaxially from the second face (61.2).
